**Europäisches Patentamt**

**European Patent Office**

**Office européen des brevets**

(19)

(11) Veröffentlichungsnummer : **0 514 323 A1**

## (12) EUROPÄISCHE PATENTANMELDUNG

(21) Anmeldenummer : **92810289.6**

(22) Anmeldetag : **22.04.92**

(51) Int. Cl.[5] : **F26B 3/08,** B01J 8/44

(30) Priorität : **17.05.91 DE 4116214**

(43) Veröffentlichungstag der Anmeldung :
**19.11.92 Patentblatt 92/47**

(84) Benannte Vertragsstaaten :
**DE FR GB SE**

(71) Anmelder : **HILTI Aktiengesellschaft**
**FL-9494 Schaan (LI)**

(72) Erfinder : **Maier, Elmar**
**Letzebühelweg 10**
**A-6807 Feldkirch-Tisis (AT)**
Erfinder : **Droessler, Eckart**
**Ing.-Kastner-Strasse 140**
**A-6712 Thüringen (AT)**

(74) Vertreter : **Wildi, Roland**
**Hilti Aktiengesellschaft Patentabteilung**
**FL-9494 Schaan (LI)**

(54) **Transporteinrichtung für Kleinteile.**

(57) Transporteinrichtung für Kleinteile innerhalb eines Wirbelbettes (2) in Form eines schräg angeordneten, gasdurchlässigen Bodens (6). Auf der Unterseite des Bodens (6) sind Gaszuleitungskammern (6a, 6b, 6c, 6d) angeordnet, die gegeneinander gasdicht abgeschlossen sind und mittels unterschiedlichem Gasdruck die sich über dem Boden (6) befindlichen unterschiedlich hohen Pulversäulen (2a, 2b, 2c, 2d) in ein gleichmässiges Wirbelbett (2) überführen.

Fig. 1

EP 0 514 323 A1

Die Erfindung betrifft eine Transporteinrichtung für Kleinteile innerhalb eines Wirbelbettes, bestehend aus einem schräg verlaufenden, gasdurchlässigen Boden, der auf der dem Medium abgewandten Seite Gaszuleitungskammern abdeckt.

Aus der DE-AS 21 01 143 ist eine Vorrichtung zum kontinuierlichen thermischen Behandeln körnigen Gutes mittels eines Gases in einem geneigten, mit mehreren Gaszuleitungskammern versehenen Wirbelbett mit einer einlaufseitigen Gutleitklappe und einer auslaufseitigen höhenverstellbaren Stauwand sowie mit Stellmitteln für die Regelung des Gaszustromes bekannt. Dabei wird unter Einsatz der Leit- und Stellmittel eine gleichbleibende Leistung der Vorrichtung und mit einer gleichbleibenden Gastemperatur eine konstante Austrittstemperatur der Körner erreicht.

Die Gaseintrittsöffnungen jeder Gaszuleitungskammer werden aus einem Lochblech und einem diesem zugeordneten Lochschieber querschnittsveränderbar gebildet.

Nachteilig wirkt sich die mechanische Querschnittsveränderung der Gaseintrittsöffnungen aus. Je nach Art des sich in Verwendung befindlichen körnigen Gutes und je nach Temperatur des Wirbelbettes können Störungen der Regulierungseinrichtung auftreten. Diese Störungen können durch das Verklemmen von Teilen auf Grund unterschiedlicher Wärmeausdehnungen, durch mechanische Beschädigungen infolge des Verschleisses oder durch Verschmutzung der beweglichen Teile hervorgerufen werden. Das genaue Einstellen des entsprechenden Querschnittes der Gaseintrittsöffnungen ist somit nicht mehr möglich.

Der Erfindung liegt die Aufgabe zugrunde, eine Transporteinrichtung mit einem gasdurchlässigen Boden zu schaffen, die frei ist von den zuvor genannten Nachteilen.

Erfindungsgemäss wird die Aufgabe dadurch gelöst, dass die Gaszuleitungskammern gegeneinander gasdicht abgeschlossen sind und der Gasdruck jeder Gaszuleitungskammer einzeln regelbar ist.

Ueber dem schräg in einer Retorte eingebauten gasdurchlässigen Boden steht über jeder Gaszuleitungskammer eine unterschiedlich hohe Pulversäule. Das führt dazu, dass das Gas entlang des Weges mit dem geringsten Widerstand entweicht und dass nur die Bereiche mit der geringsten Pulverhöhe fluidisiert werden. Durch die unterschiedliche Höhe entsteht ein unterschiedlicher Druck auf die Oberfläche des Bodens. Diesem Druck entsprechend muss die Gasbeaufschlagung der einzelnen Gaszuleitungskammern geregelt werden. Der in einem Gasbehälter mit entsprechend hohem Vorratsdruck zur Verfügung stehende Gasdruck muss daher für jede Gaszuleitungskammer individuell reduziert werden. Es entsteht dabei keine Gasmengenreduktion.

Durch gezieltes Einstellen der Druckverhältnisse in den Gaszuleitungskammern kann jedes beliebige Pulver begast werden. Es sind bei einem Wechsel auf ein Pulver mit anderen Fluidisierungseigenschaften keine konstruktiven Aenderungen erforderlich.

Vom Stand der Technik, wie er aus der DE-AS 21 01 143 entnehmbar ist, wird bei jeder Aenderung der Gaseintrittsöffnungen der Druck und die Gasmenge gemeinsam beeinflusst. Eine für den gesamten gasdurchlässigen Boden zur Verfügung stehende Gasmenge wird auf die Gaszuleitungskammern unterschiedlich aufgeteilt. Beim Gegenstand der Erfindung werden alle Gaszuleitungskammern mit der gleichen Gasmenge, aber mit unterschiedlichem Druck beaufschlagt.

Vorteilhafterweise weist der Boden am Uebergang zwischen den einzelnen Gaszuleitungskammern Stufen auf, wobei das Stufenniveau in Neigungsrichtung abnimmt.

Um das Gleiten des zu behandelnden Gutes auf dem gasdurchlässigen Boden von einer Gaszuleitungskammer zur anderen zu ermöglichen, weist der Boden treppenförmige Stufen auf. Die Schweissnähte, die die Kammern gegeneinander abschliessen, verschwinden auf diese Weise hinter einer gasdurchlässigen Kante. Somit wird die Bildung von Strömungsschatten über diesen Schweissnähten, die zu Pulveraufhäufungen führen können, verhindert. Solche Pulveraufhäufungen würden als Querrippen stehen bleiben und das Gleiten der Kleinteile verhindern.

Zweckmässigerweise ist der Anstellwinkel des Bodens zur Horizontalen verstellbar. Durch Schrägstellen des Bodens wird die Schwerkraft ausgenützt, um die Kleinteile an einem bestimmten Ort innerhalb der Retorte zu sammeln. Von dort erfolgt deren Weitertransport mit einer Transporteinrichtung.

Vorteilhafterweise ist der Boden als Sintergitter ausgebildet. Um die Gasdurchlässigkeit zu gewährleisten, wird ein Sintergitter verwendet. Dieses Sintergitter ist eine Sandwich-Konstruktion aus mehreren rostfreien Stahlgeweben. Die Gitter werden in der gewünschten Abfolge aufeinandergelegt, und mittels Druck und Temperatur gegeneinander versintert.

Solche Gitter sind auf dem Markt erhältlich. Weitere Möglichkeiten, die Gasdurchlässigkeit des Bodens zu gewährleisten, stellen Bohrungen im Boden und ein Boden bestehend aus einem Material mit konstanter Porosität dar.

Die Erfindung wird anhand eines Ausführungsbeispieles näher erläutert. Es zeigen:

Fig. 1 eine schematische Darstellung einer Vorrichtung zum Härten und Oberflächenbeschichten von kleinen Kleinteilen;

Fig. 2 einen Querschnitt durch eine Retorte;

Fig. 3 einen gasdurchlässigen Boden in vergrösserter Darstellung;

Fig. 4 ein Schema der Gasdruckregelung.

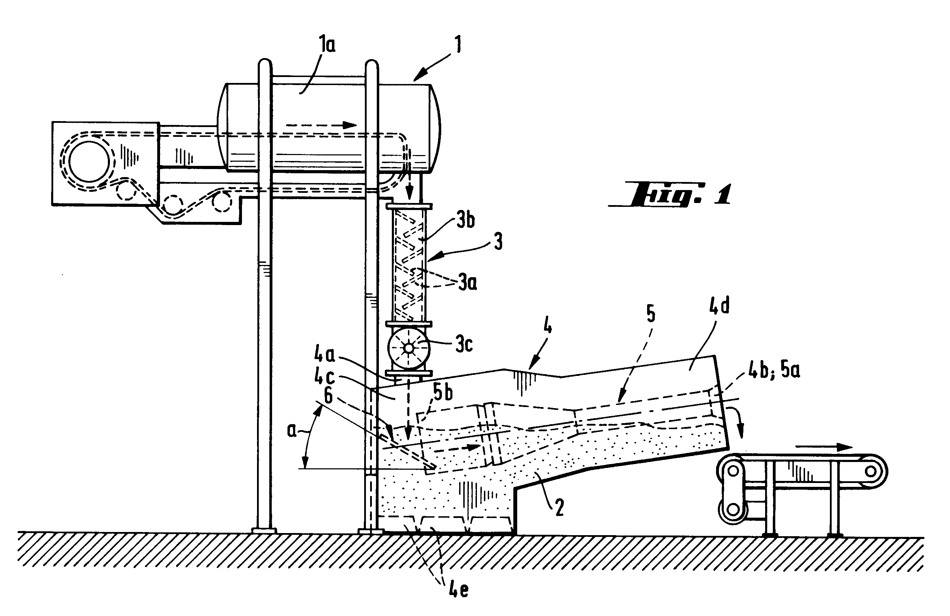

Die Fig. 1 zeigt eine Wärmebehandlungsstation 1, in der Kleinteile wie Bolzen oder Nägel erwärmt und anschliessend dem Wirbelbett 2 zugeführt werden. Der Wärmeinhalt der Kleinteile beim Eintauchen in das Wirbelbett 2 ist massgebend für die Dicke der aufzuschmelzenden Beschichtung.

Zur Erstellung einer entsprechend dünnen Schichtdicke muss die hohe Temperatur der die Wärmestation 1 verlassenden Kleinteile entsprechend gesenkt werden. Zu diesem Zweck ist zwischen Wärmebehandlungsstation 1 und Wirbelbett 2 eine Abkühlvorrichtung 3 angeordnet. Diese ist im wesentlichen vertikal angeordnet, in ihrer Längsrichtung beidseitig offen und weist im Innern wärmeableitende Platten 3a auf. Der Innenraum 3b der Abkühlvorrichtung 3 wird von oben mit den heissen Kleinteilen beschickt, die durch Schwerkraft nach unten fallen und dabei die Platten 3a aufeinanderfolgend kontaktieren. Dadurch wird den Kleinteilen Wärme entzogen, bevor sie in das Wirbelbett 2, das sich in einer Retorte 4 befindet, fallen. Vor dem Eintritt der Kleinteile in das Wirbelbett 2 durchlaufen diese eine Zellradschleuse 3c, die das der Abschreckung der Kleinteile dienende Wirbelbett 2 gegenüber dem Härteofen la abdichtet. Flüchtige Teile des sich in der Retorte 4 befindlichen Wirbelbettes könnten sonst in den Härteofen la gelangen und diesen beschädigen. Im Wirbelbett 2 befindet sich ein schräg angeordneter Boden 6, der die Kleinteile mit Hilfe der Schwerkraft an einen bestimmten Ort innerhalb der Retorte 4 transportiert, um sie dort sammeln zu können. Von dort werden sie anschliessend mittels einer Transporteinrichtung in Form einer Trommel 5 zur Abgabeöffnung 4b der Retorte 4 transportiert.

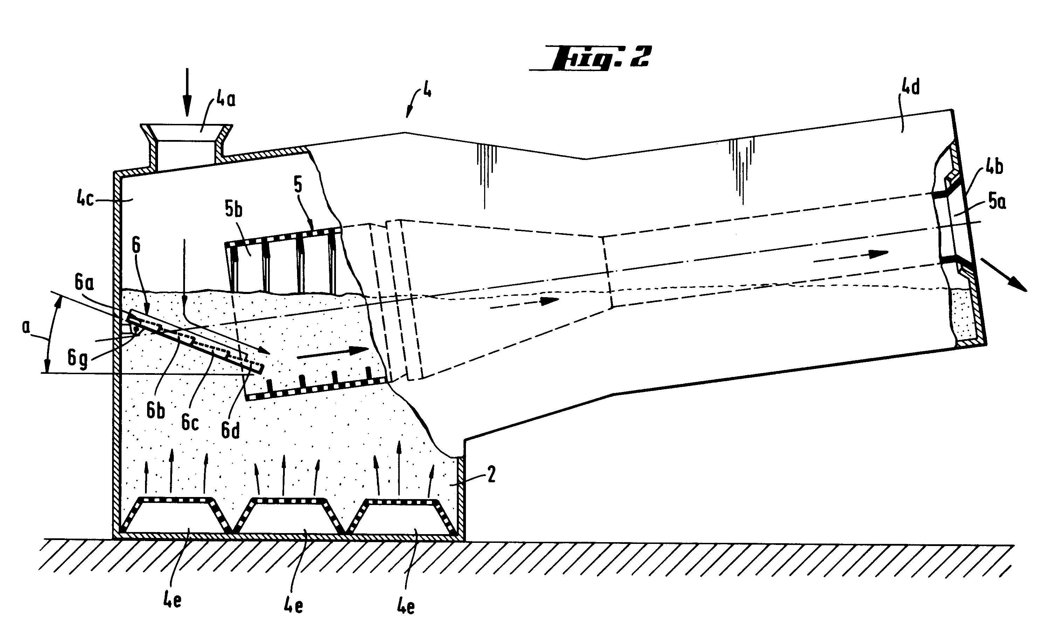

Die Fig. 2 zeigt einen Querschnitt durch eine Retorte 4 mit einer im wesentlichen horizontal angeordneten Aufnahmeöffnung 4a und mit einer im wesentlichen vertikal angeordneten Abgabeöffnung 4b. Die Retorte 4 weist im aufnahmeseitigen Bereich 4c das grösste Volumen und im abgabeseitigen Bereich 4d das kleinste Volumen auf. Der tiefste Punkt der Retorte 4 liegt im aufnahmeseitigen Bereich 4c. Im Innern der Retorte 4 ist eine Trommel 5 mit einer nicht dargestellten innenliegenden Wendel angeordnet, die Kleinteile, die sich in der Trommel 5 befinden, vom aufnahmeseitigen Bereich 4c zum abgabeseitigen Bereich 4d transportiert. Das in der Retorte 4 sich befindende Wirbelbett 2 wird zum einen mit Gaszuleitungskammern 4e am tiefsten Punkt der Retorte 4 und zum anderen mit den Gaszuleitungskammern 6a, 6b, 6c, 6d des schräg angeordneten Bodens 6 im fluidisierten Zustand gehalten.

Die Trommel 5 ist vorzugsweise geneigt angeordnet, so dass der abgabeseitige Bereich 5a der Trommel 5 höher liegt, als der aufnahmeseitige Bereich 5b. Die Trommel 5 ragt mit dem aufnahmeseitigen Bereich 5b grösstenteils in das Wirbelbett 2. Die Eintauchtiefe der Trommel 5 im Wirbelbett 2 nimmt zum abgabeseitigen Bereich 5a hin zunehmend ab, so dass der grösste Teil des abgabeseitigen Bereiches 5a der Trommel 5 nicht mehr im Wirbelbett 2 liegt.

Senkrecht unter der Aufnahmeöffnung 4a der Retorte 4 befindet sich der schräg im Anstellwinkel a angeordnete Boden 6, der dem Wirbelbett 2 zugeführte Kleinteile in den aufnahmeseitigen Bereich 5b der Trommel 5 transportiert, so dass diese mit der Trommel 5 durch das Wirbelbett 2 zum abgabeseitigen Bereich 5a transportiert werden können.

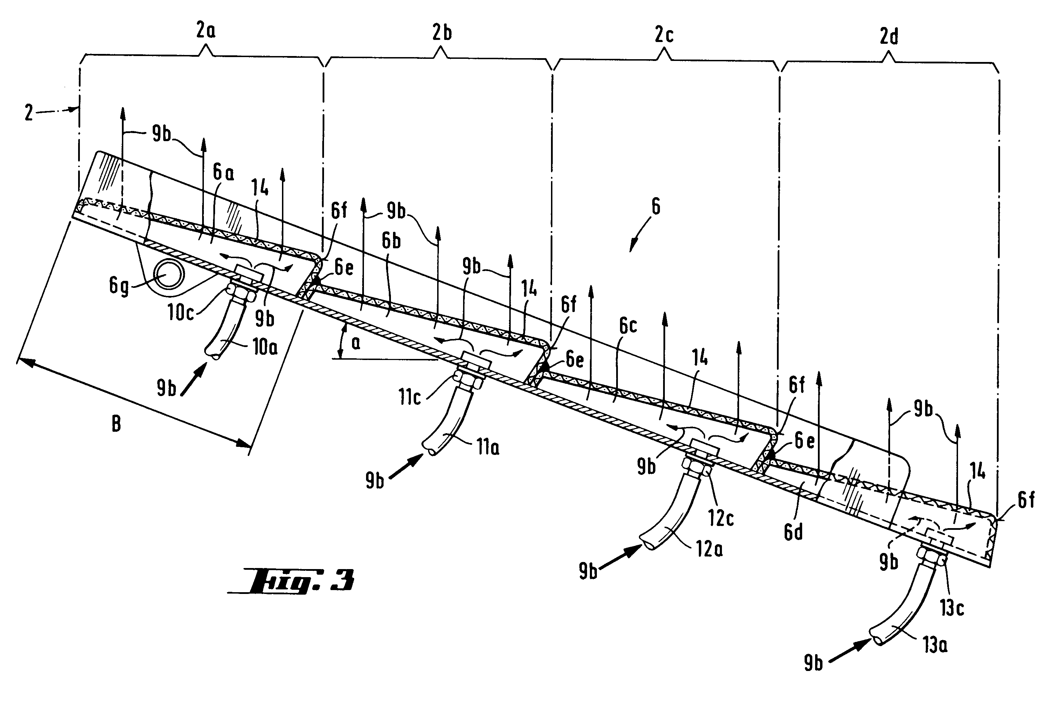

In der Fig. 3 ist ein gasdurchlässiger Boden 6 dargestellt. Dieser ist dabei in Streifen mit einer Breite B von vorzugsweise 100 mm unterteilt. Die sich somit ergebenden einzelnen Gaszuleitungskammern 6a, 6b, 6c, 6d müssen gegeneinander gasdicht abgeschlossen sein. Um das Gleiten der Kleinteile auf dem gasdurchlässigen Boden 6 von einer Gaszuleitungskammer 6a, 6b, 6c, 6d zur anderen zu ermöglichen, weist der Boden 6 treppenförmige Stufen auf. Die Schweissnähte 6e, die die Gaszuleitungskammern 6a, 6b, 6c, 6d gegeneinander abschliessen sollen, verschwinden auf diese Weise hinter einer gasdurchlässigen Kante 6f. Andernfalls wäre zu befürchten, dass sich über diesen Schweissnähten Strömungsschatten bilden, die zu Pulveraufhäufungen führen. Solche Pulveraufhäufungen würden als Querrippen stehen bleiben und das Gleiten der Kleinteile verhindern.

Die Gasdurchlässigkeit des Bodens 6 wird mit einem Sintergitter 14 erreicht. Dieses Sintergitter 14 ist eine Sandwich-Konstruktion aus mehreren rostfreien Stahlgeweben. Die Gitter werden in der gewünschten Abfolge aufeinandergelegt und durch Druck und Temperatur gegeneinander versintert.

Auf der Unterseite des Bodens 6 ist eine das Schrägstellen des Bodens 6 ermöglichende Einrichtung in Form eines Scharniers 6g angeordnet. Ebenfalls an der Unterseite der Gaszuleitungskammern 6a, 6b, 6c, 6d sind Gaszuleitungen 10a, 11a, 12a, 13a mit entsprechenden Schraubverbindungen 10c, 11c, 12c, 13c angeordnet. Die Anordnung der Gaszuleitungen 10a 11a, 12a, 13a kann auch seitlich an den Gaszuleitungskammern 6a, 6b, 6c, 6d erfolgen. Diese Gaszuleitungen 10a, 11a, 12a, 13a ermöglichen das Zuführen von Gas 9b mit unterschiedlichen Gasdrücken, die mittels einer nicht dargestellten Regeleinrichtung steuerbar sind.

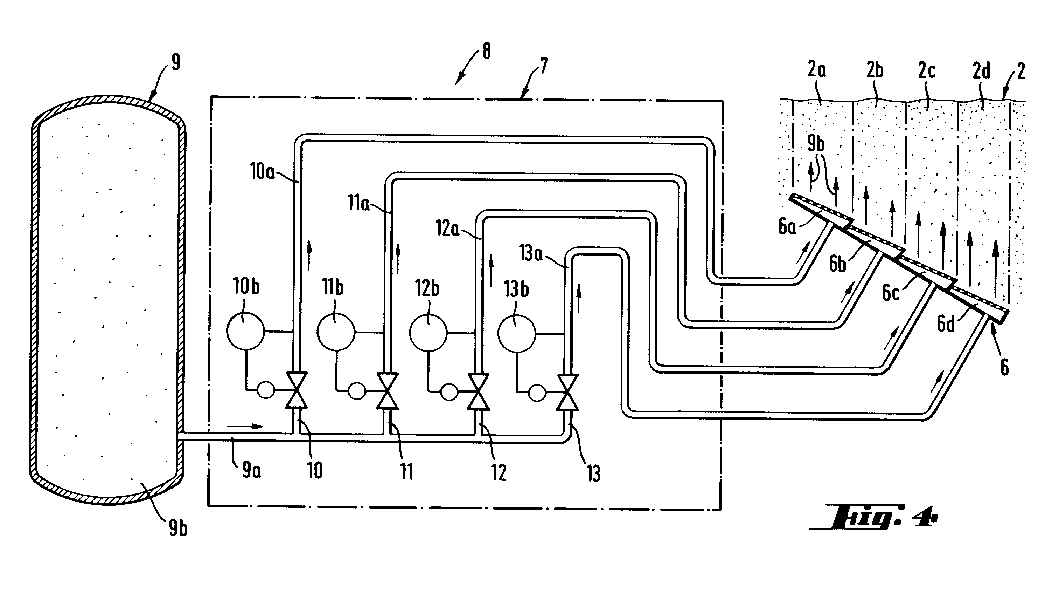

In der Fig. 4 ist die Gasdruckregelung 8 in Verbindung mit dem Vorratsbehälter 9, der Regeleinrichtung 7 und dem Boden 6 mit den Gaszuleitungskammern 6a, 6b, 6c, 6d schematisch dargestellt. Wird dieser Boden 6 schräg in eine Retorte 4 eingebaut, so steht über jeder der Gaszuleitungskammern 6a, 6b, 6c, 6d eine unterschiedlich hohe Pulversäule 2a, 2b, 2c, 2d. Durch die unterschiedliche Höhe resultiert ein unterschiedlicher Druck auf den gasdurchlässigen Boden 6. Diesem Druck entsprechend muss der Gasdruck der Gaszuleitungskammern 6a, 6b, 6c, 6d abgestimmt werden. Eine vom Vorratsbehälter 9 ausgehende Hauptleitung 9a versorgt mehrere Einzelleitungen 10, 11, 12, 13 mit Gas 9b. Jede dieser Einzelleitungen ist mit einer Regeleinheit 10b, 11b, 12b, 13b verbunden, die ihrerseits den Gasdruck der einzelnen Gaszuleitungskammern 6a, 6b, 6c, 6d steuern. Auf diese Weise kann der Gasdruck jeder einzelnen Gaszuleitungskammer 6a, 6b, 6c, 6d geregelt werden.

Durch gezieltes Einstellen der Druckverhältnisse kann jedes beliebige Pulver begast werden. Bei der Verwendung eines Pulvers mit anderen Fluidisierungseigenschaften müssen keine konstruktiven Aenderungen des Bodens 6 oder der Gaszuleitungskammern 6a, 6b, 6c, 6d vorgenommen werden. Bei ausreichendem Druckgefälle zwischen dem Vorratsbehälter 9 und den einzelnen Regeleinheiten 10b, 11b, 12b, 13b ist eine individuelle Druckregelung der Gaszuleitungskammern 6a, 6b, 6c, 6d möglich, ohne dabei eine Gasmengenreduktion in Kauf nehmen zu müssen. Es können somit alle Gaszuleitungskammern 6a, 6b, 6c, 6d mit der gleichen Gasmenge aber unterschiedlichem Gasdruck beaufschlagt werden.

**Patentansprüche**

1. Transporteinrichtung für Kleinteile innerhalb eines Wirbelbettes (2), bestehend aus einem schräg verlaufenden, gasdurchlässigen Boden (6), der auf der dem Medium abgewandten Seite Gaszuleitungskammern (6a, 6b, 6c, 6d) abdeckt, **dadurch gekennzeichnet**, dass die Gaszuleitungskammern (6a, 6b, 6c, 6d) gegeneinander gas dicht abgeschlossen sind und der Gasdruck jeder Gaszuleitungskammer (6a, 6b, 6c, 6d) einzeln regelbar ist.

2. Transporteinrichtung nach Anspruch 1, dadurch gekennzeichnet, dass der Boden (6) am Uebergang zwischen den einzelnen Gaszuleitungskammern (6a, 6b, 6c, 6d) Stufen aufweist, wobei das Stufenniveau in Neigungsrichtung abnimmt.

3. Transporteinrichtung nach Anspruch 1 oder 2, dadurch gekennzeichnet, dass der Anstellwinkel (a) des Bodens 6 zur Horizontalen verstellbar ist.

4. Transporteinrichtung nach einem der Ansprüche 1 bis 3, dadurch gekennzeichnet, dass der Boden 6 als Sintergitter 14 ausgebildet ist.

*Fig. 1*

Fig. 2

EP 0 514 323 A1

Fig. 3

EP 0 514 323 A1

EP 0 514 323 A1

Fig. 4

8

**Europäisches Patentamt**

# EUROPÄISCHER RECHERCHENBERICHT

Nummer der Anmeldung

EP    92 81 0289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 219 745 (KRUPP POLYSIUS AG)<br>* das ganze Dokument *<br>--- | 1,2,3 | F26B3/08<br>B01J8/44 |
| X | FR-A-2 337 862 (DUMONT)<br>* das ganze Dokument *<br>--- | 1,2,4 | |
| X | FR-A-2 096 204 (UNILEVER N.V.)<br>* das ganze Dokument *<br>--- | 1,2 | |
| A | DE-A-3 123 328 (JOHANNES MÖLLER HAMBURG GMBH & CO KG)<br>* das ganze Dokument *<br>--- | 1,2,3 | |
| A | GB-A-1 438 495 (ACCUMATIC ENGINEERING LIMITED)<br>* das ganze Dokument *<br>--- | 4 | |
| A | DE-C-974 798 (WINTERSHALL-AKTIENGESELLSCHAFT ET AL)<br>--- | | |
| A | DE-A-3 902 271 (GEBRÜDER BÜHLER AG)<br><br>----- | | |

**RECHERCHIERTE SACHGEBIETE (Int. Cl.5 )**

F26B
B01J

Der vorliegende Recherchenbericht wurde für alle Patentansprüche erstellt

| Recherchenort | Abschlußdatum der Recherche | Prüfer |
|---|---|---|
| DEN HAAG | 24 AUGUST 1992 | SILVIS H. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
 
........................................................................................
& : Mitglied der gleichen Patentfamilie, übereinstimmendes Dokument